# EUROPÄISCHE PATENTSCHRIFT

(11) **EP 4 211 491 B1**
(45) Veröffentlichungstag und Bekanntmachung des Hinweises auf die Patenterteilung: **31.07.2024**
(21) Anmeldenummer: 21793932.1
(22) Anmeldetag: 15.10.2021
(51) Int. Cl.: G01S 17/89, G01S 7/481, G01S 7/497

(54) **LASERSCANNER**
LASER SCANNER
SCANNER LASER

(30) Priorität: 16.10.2020 DE 102020127350; 28.06.2021 DE 102021116581
(43) Veröffentlichungstag der Anmeldung: 19.07.2023
(73) Patentinhaber: Zoller & Fröhlich GmbH, 88239 Wangen im Allgäu (DE)
(72) Erfinder: FRÖHLICH, Christoph, 88239 Wangen (DE); METTENLEITER, Markus, 88316 Isny (DE)
(74) Vertreter: Winter, Brandl - Partnerschaft mbB
(86) Internationale Anmeldenummer: PCT/EP2021/078702
(87) Internationale Veröffentlichungsnummer: WO 2022/079293

(56) Entgegenhaltungen:
- DE-A1- 1 472 198
- DE-A1- 102017 107 667
- US-A1- 2016 047 914

## Beschreibung

Die Erfindung betrifft einen Laserscanner gemäß dem Oberbegriff des Patentanspruchs 1.

Aus dem Stand der Technik sind Scanner zur 3D- und 2D-Vermessung von Objekten bekannt. Die 3D-Vermessung erfolgt beispielsweise mittels eines Scanners, wie er in dem Patent DE 101 50 436 B4 der Anmelderin beschrieben ist. Ein weiter verbesserter 3D-Laserscanner ist in der ebenfalls auf die Anmelderin zurückgehenden DE 10 2016 119 155 A1 offenbart. Bei einem derartigen Scanner wird der von einem optischen Sender abgegebene Laser-Messstrahl durch eine Ablenkeinheit derart abgelenkt, dass eine flächendeckende, dreidimensionale räumliche Umgebungsvermessung ermöglicht ist. Die digitalisierten Messdaten werden auf einem Rechnersystem abgelegt und stehen dort zur weiteren Bearbeitung und Visualisierung des vermessenen Objekts zur Verfügung.

Die 3D-Vermessung erfolgt durch Führen des modellierten Laserlichtes über die zu vermessende Umgebung, wobei für unterschiedliche Raumrichtungen sowohl der Entfernungs- als auch der Reflektivitätswert punktuell vermessen werden kann. Aus der Anordnung aller vermessenen Raumrichtungen resultieren dann Entfernungs- und Reflektivitätsbilder. Die Entfernungsbilder geben die Geometrie der Umgebung wieder und die Reflektivitätsbilder deren visuelle Abbildungen, analog zu den Grauwerten einer Videokamera. Beide Bilder korrespondieren pixelweise und sind aufgrund der eigenständigen, aktiven Beleuchtung mit Laserlicht weitgehend unabhängig von Umwelteinflüssen.

Zur 2D-Vermessung werden beispielsweise Scanner verwendet, wie sie unter der Bezeichnung "Profiler"^{®} 9012 von der Anmelderin angeboten werden. Mit einem derartigen Scanner erfolgt eine 360°-Profilmessung durch Rotation eines Umlenkspiegels der Ablenkeinheit, wobei die Drehzahl des Umlenkspiegels die Anzahl der zu vermessenden Profile pro Sekunde bestimmt, wobei jedes dieser 360°-Profile aus einzelnen Messpunkten entsprechend der Abtastrate des Scanners besteht.

Zur flächendeckenden Erfassung, beispielsweise bei der Vermessung von Fahrdrähten, gleisnahen Gebäuden, Tunnelröhren oder beim Mobile Mapping bewegt sich das Trägerfahrzeug beispielsweise mit unterschiedlichen Geschwindigkeiten, je nach gewünschtem Abstand des lateralen Abstands zweier aufeinander folgender Profile, im Bereich von wenigen m/s (Innenbereiche von Fabriken, etc.) bis hin zu 100km/h (Landstraßen, etc.) oder auch darüber (Autobahn, etc.).

Der vorgenannte "Profiler" hat ein gestuftes Gehäuse, in dem die Komponenten des Scanners, beispielsweise ein Laserkopf, ein Detektor/Empfänger, eine Steuer- und Auswerteeinheit aufgenommen sind. Die Ablenkeinheit und der zugehörige Antrieb sind im Wesentlichen im Bereich einer Stufe außerhalb des Gehäuses angeordnet, wobei die Ablenkeinheit so weit aus dem Gehäuse auskragt, dass die genannte 360°-Vermessung ermöglicht ist. Dabei wird der Scanner mit seinem vergleichsweise hoch bauenden Gehäuse auf dem Trägerfahrzeug montiert und ist somit dem Fahrtwind und sonstigen Umwelteinflüssen ausgesetzt.

Bei den vorbeschriebenen 3D- und 2D-Laserscannern ist jeweils ein Referenzmodul vorgesehen, das als Referenz für den Distanzmesser sowohl für die Messung der Intensität als auch der Distanz dient. Beide Messwerte neigen zu einem temperaturabhängigen Drift und sind auch Änderungen durch Alterungseffekte des Laserkopfs und der Elektronik unterworfen. Diese Abweichungen werden durch Messung auf die Referenz (mit bekannter Distanz und Intensität) kompensiert.

Bei dem eingangs genannten 3D-Laserscannern gemäß der DE 101 50 634 B4 und der DE 10 2016 119 155 A1 sind diese Referenzmodule an dem Gehäuse des Scanners angebracht, so dass die Referenzflächen bei jedem Profil (Durchlauf der Laserstrahlablenkung in Elevation) miterfasst werden. Dies ist allerdings bei einem 2D-Scanner, wie dem "Profiler" nicht realisierbar, da dieser, wie oben ausgeführt, ein 360°-Sichtfeld haben muss.

Dementsprechend wurde bislang beim "Profiler" am Gehäuse eine bewegliche Referenzplatte befestigt, die in bestimmten Intervallen kurz in den Strahlengang (unterhalb eines rotierenden Rotorkopfs der Ablenkeinheit) verfahren wird und ansonsten während der überwiegenden Zeit der Messung eingezogen bleibt. Ein derartiges Referenzmodul mit einer ausfahrbaren Referenzplatte hat jedoch insbesondere bei MMS-Anwendungen (Mobile Mapping System) erhebliche Nachteile, da dann die ausgefahrene Referenzplatte den Umwelteinflüssen ausgesetzt ist, sodass das Referenzmodul im Laufe der Zeit verschmutzt wird und insbesondere die Messung der Intensität verfälscht wird. Da das Referenzmodul während der Fahrt auch durch Regen, Spritzwasser oder dergleichen nass wird, kann es in Verbindung mit der mechanischen Verschmutzung zur Bildung von Rost oder sandigen Schmutzschichten führen, die den Mechanismus des Referenzmoduls blockieren können. Hinzu kommt, dass es bei eingefahrener, feuchter und verschmutzter Referenzplatte besonders im Winter zu einer Eisbildung im Spaltenbereich kommen kann, was ebenfalls zu einer Blockierung des Mechanismus führen kann. Diese Nachteile werden durch die vergleichsweise große Bauhöhe des Gehäuses noch verstärkt.

Aus der DE 10 2017 107 667 A1 ist ein Laserscanner bekannt, bei dem die rotierende Ablenkeinheit, ein Laserkopf und ein Detektormodul gemeinsam in einem Gehäuse angeordnet sind, wobei der von der rotierenden Ablenkeinheit abgelenkte Messstrahl durch eine umlaufende, am Gehäuse gehaltene Scheibe austritt. In diesem Gehäuse ist des Weiteren ein Referenzmodul angeordnet, auf das der Messstrahl bei jeder Umdrehung der Ablenkeinheit auftrifft, so dass die Signalqualität durch die ständige Wechselwirkung mit dem Referenzmodul verschlechtert ist. Ein weiterer Nachteil besteht darin, dass durch die Integration der Ablenkeinheit in das Gehäuse zum einen eine optimale Signalqualität nicht gewährleistet ist und zum anderen auch das Gehäuse relativ voluminös baut und schwierig sauber zu halten ist.

In der Druckschrift EP 3 657 203 A1 ist ein nicht gattungsgemäßer Entfernungsmesser gezeigt, bei dem die Entfernungsmessung mittels eines Laserstrahls erfolgt, der durch ein Objektiv austritt, das an einem Gehäuse angeordnet ist, in dem der Laserkopf, das Detektormodul und auch eine Steuereinheit angeordnet sind. Zur Referenzierung kann in den Strahlengang ein Referenzmodul eingeschwenkt werden. Mit einem derartigen Konzept ist eine 2D- oder 3D-Vermessung von Objekten nicht möglich, da keine rotierende Ablenkeinheit vorgesehen ist. Des Weiteren ist das Einschwenken eines Referenzmoduls in den Strahlengang problematisch, da die Schwenkbewegung nicht mit der erforderlichen Präzision durchführbar ist und entsprechend Veränderungen in der Referenzposition vorkommen können.

In der Druckschrift DE 1 472 198 ist ein nicht gattungsgemäßes, optisches Null-Spektralfotometer mit einem Untersuchungsstrahl zur Untersuchung einer Probe und einem Bezugsstrahl gezeigt. Ein Querschnitt des Bezugsstrahls kann mittels einer motorisch verstellbaren Blende linearbeweglich verstellt werden, um so eine Strahlungsintensität des Bezugsstrahls an diejenige des Untersuchungsstrahls anzugleichen.

Die Druckschrift US 2016/047914 offenbart eine 3D-Vermessungseinheit nach dem Lichtlaufzeitverfahren. Ein um eine horizontale Achse in einem Messkopf angeordneter Drehspiegel erfasst die Umgebung, während sich der Messkopf als Ganzes um eine vertikale Achse dreht. Einflüsse der Messumgebung, wie etwa die Temperatur, auf den Messkopf können kompensiert werden.

Demgegenüber liegt der Erfindung die Aufgabe zugrunde, einen Laserscanner mit geringerer Verschmutzungsanfälligkeit und dementsprechend verbesserter Messgenauigkeit zu schaffen. Diese Aufgabe wird durch einen Laserscanner mit den Merkmalen des Patentanspruchs 1 gelöst.

Vorteilhafte Weiterbildungen der Erfindung sind Gegenstand der Unteransprüche.

Der erfindungsgemäße Laserscanner hat einen Laserkopf zur Abgabe eines Messstrahls, eine rotierende, mittels eines Antriebs angetriebene Ablenkeinheit zum Ablenken des Messstrahls in Richtung eines Messobjekts, einen Detektor zum Erfassen des vom Messobjekt reflektierten Empfangs-/Messstrahls und eine Steuer- und Auswerteeinheit zur Signalverarbeitung. Die Ablenkeinheit ist in einem Rotorkopf mit einem Rotorgehäuse aufgenommen, der drehbar an einem Gehäuse gelagert ist. Der Laserscanner ist des Weiteren mit einem Referenzmodul zur Kompensierung von das Messsignal beeinflussenden Umwelteinflüssen, wie beispielsweise einer Temperaturdrift oder von Alterungseffekten ausgestattet. Erfindungsgemäß sind der Antrieb, der Laserkopf, der Detektor, die Steuer- und Auswerteeinheit und das Referenzmodul in dem Gehäuse aufgenommen, so dass nach außen hin praktisch lediglich der Rotorkopf mit der Ablenkeinheit aus dem Gehäuse auskragt. Das Referenzmodul ist auch während der Referenzmessung innerhalb des Gehäuses aufgenommen, so dass alle genannten Komponenten zuverlässig vor äußeren Einflüssen geschützt sind. Ein weiterer Vorteil besteht darin, dass das Referenzmodul in dem Teil des Messstrahlengangs liegt, der nicht von der Ablenkeinheit abgelenkt ist, so dass keine aus der Rotationsgeschwindigkeit der Ablenkeinheit resultierende Messfehler auftreten können.

Das kompakte Design hat des Weiteren den Vorteil, dass der Luftwiderstand des Laserscanners auch bei hohen Fahrgeschwindigkeiten minimal ist, so dass dieser während der Messung geringeren Strömungskräften ausgesetzt ist und dadurch die Messgenauigkeit weiter verbessert ist.

Erfindungsgemäß ist das Referenzmodul mit einer Referenzplatte ausgeführt, die ausgelegt ist zur Referenzmessung in den Strahlengang zwischen dem Laserkopf und der Ablenkeinheit verstellt zu werden. Wie vorstehend ausgeführt, ist diese Referenzplatte sowohl während der Referenzmessung als auch während der Profilmessung durch das Gehäuse nach außen hin abgedeckt.

Dabei ist es besonders vorteilhaft, wenn die Referenzplatte zwei einander zugewandte, schräg angestellte Umlenkflächen hat, durch die der Messstrahl, vorzugsweise um 180°, umgelenkt wird und somit zurück in Richtung zum Detektor geführt werden kann.

Der Aufbau der Referenzplatte ist besonders einfach, wenn die Umlenkflächen an einer Nut der Referenzplatte ausgebildet sind.

Bei einem Ausführungsbeispiel ist die Referenzplatte motorisch verstellbar ausgeführt. Prinzipiell kann jedoch auch eine pneumatische oder hydraulische Verstellung gewählt werden.

Die Referenzmessung ist besonders präzise, wenn die Referenzplatte entlang einer Linearführung geführt ist.

Die motorische Verstellung erfolgt dabei vorzugsweise mittels eines Linearantriebs.

Dieser kann beispielsweise mit einem Servomotor ausgeführt sein, der über einen Lenkermechanismus mit der Referenzplatte verbunden ist.

Der Lenkermechanismus ist gemäß einem bevorzugten Ausführungsbeispiel mit einem vom Servomotor angetriebenen Servohebel ausgeführt, der gelenkig mit einer Koppelstange verbunden ist, die ihrerseits mittelbar oder unmittelbar an der Referenzplatte angelenkt ist, so dass der Hub der Referenzplatte durch die entsprechende Verschwenkung des Servohebels und der damit einhergehenden Bewegung der Koppelstange bestimmt ist.

Bei einem besonders kompakt ausgeführten Ausführungsbeispiel ist das Referenzmodul so innerhalb des Gehäuses orientiert, dass die Verstellrichtung der Referenzplatte in etwa quer zum Messstrahl orientiert ist. Unter quer wird dabei etwa ein rechter Winkel verstanden, wobei der Hub im Zentimeterbereich, beispielsweise zwischen drei und fünf Zentimetern liegt.

Die Bauhöhe des Laserscanners lässt sich weiter verringern, wenn das Referenzmodul, der Antrieb, der Laserkopf, der Detektor und die Steuereinheit im Wesentlichen nebeneinanderliegend, allenfalls mit geringem Vertikalversatz im Gehäuse angeordnet sind.

Die dem Fahrtwind ausgesetzte Stirnfläche des Gehäuses ist minimal, wenn dieses eine Höhe (bezogen auf die Standfläche) hat, die geringer als der dreifache Außendurchmesser des Rotorkopfs ist. Besonders bevorzugt ist es, wenn die Höhe des Gehäuses in etwa dem doppelten Außendurchmesser des Rotorkopfs entspricht.

Die Verschmutzungsanfälligkeit lässt sich weiter verringern, wenn das Gehäuse im Wesentlichen quaderförmig mit im Wesentlichen glattflächigen Wandungen ausgeführt ist. Eine derartige Lösung hat den weiteren Vorteil, dass auch der Luftwiderstand gegenüber dem Laserscanner gemäß dem Stand der Technik mit seinem hochbauenden, vergleichsweise zerklüfteten Gehäuse verringert ist.

Dieser Effekt lässt sich noch weiter verbessern, wenn eine von der Standfläche des Gehäuses beabstandete Deckfläche in einem zur Ablenkeinheit beabstandeten Bereich abfallend ausgeführt ist.

Zur Erhöhung der Betriebssicherheit ist bei einem Ausführungsbeispiel der Erfindung eine Sensorik zur Erfassung der Referenzplattenposition vorgesehen.

Das erfindungsgemäße Konzept ist dementsprechend so ausgeführt, dass die Führung der Referenzplatte so präzise ist, dass es zu keinen zufälligen Änderungen in der Distanz und Intensität kommt.

Durch die Sensoren, beispielsweise Reed-Schalter, wird die Position der Referenzplatte kontrolliert, so dass Fehler bei der Referenzmessung durch eine nicht vollständig ein- oder ausgefahrene Referenzplatte verhindert werden können.

Die Laseroptik und auch die Geometrie der Referenzplatte sind so ausgelegt, dass selbst in dem extremen Nahbereich innerhalb des Gehäuses noch Licht in den Detektor/Empfänger gelangen kann.

Dabei wird erfindungsgemäß dafür gesorgt, dass der relativ lange Hub der Referenzplatte, beispielsweise im Bereich von drei bis vier Zentimetern, durch geeignete Auslegung des Linearantriebs in sehr kurzer Zeit, beispielsweise in weniger als einer Sekunde, durchfahren werden kann, wobei die einzelnen Komponenten im Hinblick auf das Gewicht und den Platzbedarf optimiert sind.

Bei einem Ausführungsbeispiel der Erfindung ist die Referenzplatte aus Aluminium gefertigt.

Die Referenzplatte blockiert im ausgefahrenen Zustand den ausgehenden Laserstrahl, wodurch dieser in genau definierter Distanz und Intensität in den optischen

Empfänger/Detektor rückgestreut wird. Dabei verlässt kein Laserlicht den Rotor der Ablenkeinheit, so dass auch zufällig anwesende Umgebungsobjekte die Referenzmessung nicht verfälschen können.

Im eingefahrenen Zustand der Referenzplatte wird der Laserstrahl ungehindert in die Umgebung ausgekoppelt und des Weiteren auch der Strahlengang des vom Messobjekt reflektierten Empfangsstrahls nicht behindert.

Bevorzugte Ausführungsbeispiele der Erfindung werden im Folgenden anhand schematischer Zeichnungen näher erläutert. Es zeigen.
Figur 1 eine dreidimensionale Darstellung eines erfindungsgemäßen 2D-Laserscanners;
Figur 2 eine Seitenansicht des Laserscanners gemäß Figur 1;
Figur 3 eine Ansicht des Laserscanners bei geöffnetem Gehäuse, wobei die einzelnen Komponenten lediglich schematisch dargestellt sind;
Figur 4 eine Prinzipdarstellung zur Verdeutlichung der Position eines Referenzmoduls des Laserscanners gemäß den Figuren 1 bis 3;
Figur 5 eine Figur 4 entsprechende Darstellung, wobei eine Referenzplatte des Referenzmoduls in den Strahlengang verfahren ist und
Figur 6 eine Seitenansicht des Referenzmoduls gemäß den Figuren 3, 4, 5.

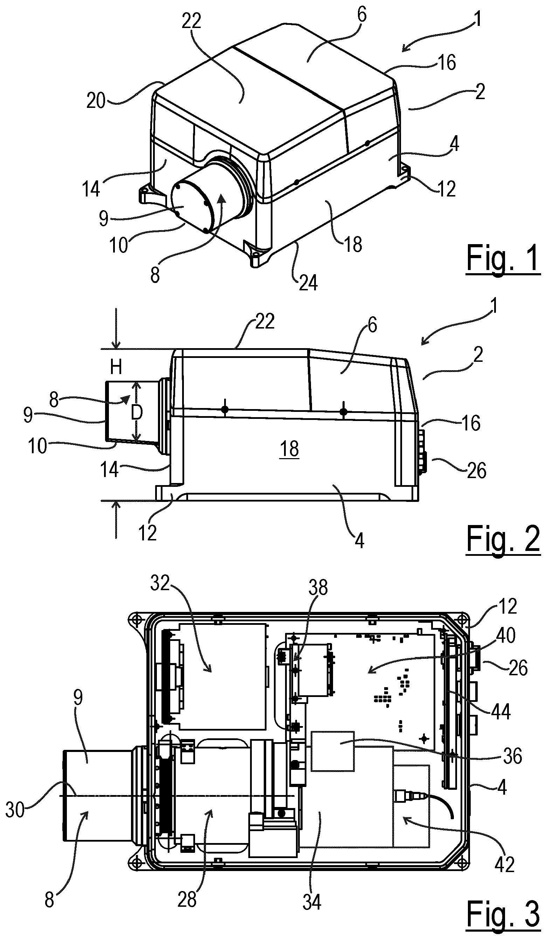

Die Figuren 1 und 2 zeigen Außenansichten eines erfindungsgemäßen 2D-Laserscanners 1, der die Vermessung von 360°-Profilen ermöglicht. Der Laserscanner 1 hat ein etwa quaderförmiges Gehäuse 2 mit einem Gehäuseunterteil 4 und einem Gehäusedeckel 6, der auf das Gehäuseunterteil 4 aufgesetzt ist. Stirnseitig ragt aus dem Gehäuse 2 eine Ablenkeinheit 8 heraus. Diese ist in einem drehbar am Gehäuse 2 gelagerten Rotorgehäuse eines Rotorkopfs 9 aufgenommen, an dessen in Fig. 1 unten liegender Abflachung 10 ein Austrittsfenster für einen Messstrahl ausgebildet ist. Der Rotorkopf 9 mit der Ablenkeinheit 8 rotiert um eine Horizontalachse, so dass über den Messstrahl ein 360°-Profil abtastbar ist. Am Gehäuseunterteil 4 sind Stützfüße 12 (nur eine mit einem Bezugszeichen bezeichnet) ausgebildet, entlang denen der Laserscanner 1 auf einem Träger, beispielsweise eines Trägerfahrzeugs, befestigt ist.

Wie sich insbesondere aus Fig. 1 ergibt, ist das Gehäuse 2 im weitesten Sinn glattflächig mit verrundeten Kanten und Eckbereichen ausgebildet, so dass der Luftwiderstand minimal ist. Das Gehäuse ist gegenüber den aus dem Stand der Technik bekannten Lösungen deutlich flacher ausgeführt, wobei die beim Fahren des Trägerfahrzeugs dem Fahrtwind ausgesetzten Stirnflächen (in den meisten Fällen ist der Laserscanner 1 mit der Ablenkeinheit 8 entgegen der Fahrtrichtung orientiert, so dass die gegenüberliegende Stirnfläche 16 angeströmt wird). Die beiden Stirnflächen 14, 16 sind mit einer geringeren Fläche als die etwa rechtwinklig dazu angeordneten Seitenflächen 18, 20 und die Grundflächen 22, 24 ausgebildet.

Fig. 2 zeigt eine Seitenansicht des Laserscanners 1, in der die Seitenfläche 18 zum Betrachter hin angeordnet ist, während die Stirnflächen 14, 16 senkrecht zur Zeichenebene verlaufen. In dieser Darstellung sieht man Anschlüsse 26, die an der rückseitigen Stirnfläche 16 ausgebildet sind, und über die die Stromversorgung sowie Signalleitungen etc. angeschlossen sind.

Zur weiteren Minimierung des Strömungswiderstands sind die Stirnflächenabschnitte, die am Gehäusedeckel 6 ausgebildet sind, leicht angeschrägt. Auch ist die Grundfläche 22 zu den Anschlüssen 26 hin abfallend ausgeführt. Dementsprechend ist das Gehäuse durch die glattflächige Ausgestaltung und Verrundung der Eckbereiche 34 sowie der Anschrägung der Stirnflächenbereiche strömungstechnisch optimiert, so dass eine Beeinträchtigung der Messgenauigkeit durch den Fahrwind und sonstige Umwelteinflüsse minimiert ist.

Wie vorstehend ausgeführt, ist das Gehäuse 2 sehr flach ausgeführt. Beim dargestellten Ausführungsbeispiel beträgt die Gesamthöhe H des Gehäuses etwa das Zweifache des Durchmessers D der Ablenkeinheit 8. Das heißt, der Überstand des Gehäuses 2 in Vertikalrichtung über die rotierende Ablenkeinheit 8 ist minimal.

Fig. 3 zeigt eine Draufsicht des Gehäuses 2 bei abgenommenem Gehäusedeckel 6, so dass man in das Innere des Gehäuseunterteils 4 blickt. Die in Fig. 3 sichtbaren Komponenten sind lediglich angedeutet. Diese sind mehr oder weniger in einer Horizontalebene nebeneinander oder allenfalls leicht in Vertikalrichtung überlappend angeordnet. Fig. 3 zeigt eine Hohl-Spindel 28, die den rotierenden Rotorkopf 9 mit der Ablenkeinheit 8 trägt und die um die Drehachse 30 drehbar im Gehäuse gelagert ist. Der Antrieb erfolgt über einen Motor 32, der beispielsweise über einen Zahnriemen oder Direktantrieb oder dergleichen mit der Spindel 28 in Wirkverbindung steht.

Die Spindel 28 ist als Hohlspindel ausgeführt, in deren Inneren abschnittsweise der Strahlengang ausgebildet ist. Ausgerichtet zur Drehachse 30 bzw. zum Strahlengang ist im Gehäuse 2 ein Laserkopf 34 angeordnet, an den eine Laserfaser angeschlossen ist, über die der Messstrahl mittels eines Kollimators in den Laserkopf 34 eingekoppelt wird. Der von diesem Sender/Laserkopf 34 abgegebene Messstrahl wird durch einen Parabolspiegel hindurch in Richtung zur Ablenkeinheit 8 abgegeben, wobei in dieser ein mit 45° zur Drehachse 30 angeordneter Umlenkspiegel gehalten ist, über den der Messstrahl hin zum Austrittsfenster umgelenkt wird, das beim dargestellten Ausführungsbeispiel durch ein Schutzglas überdeckt ist. Der Aufbau einer derartigen Ablenkeinheit ist in dem eingangs genannten Stand der Technik, insbesondere in dem Patent DE 101 50 436 B4 der Anmelderin beschrieben. Der Aufbau des Hohlspiegels des Laserkopfs 34 ist beispielsweise in der ebenfalls auf die Anmelderin zurückgehenden DE 10 2006 040 812 A1 offenbart.

Mit dem Bezugszeichen 36 ist ein Empfänger-/Detektormodul bezeichnet, über das der von dem genannten Hohlspiegel umgelenkte, vom Messobjekt reflektierte Messstrahl (Empfangsstrahl) erfasst wird.

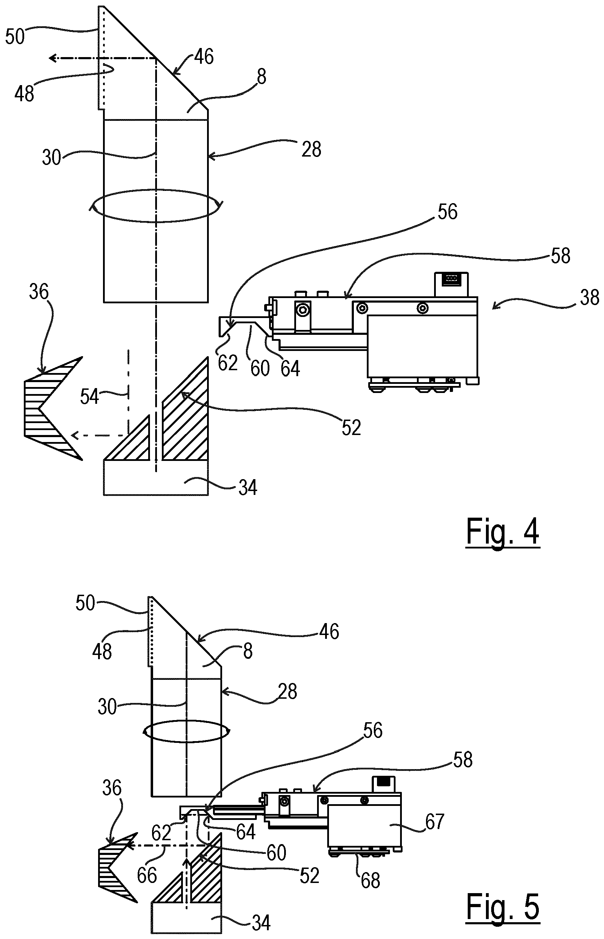

In der Fig. 3 quer zur Drehachse 30 angeordnet ist im Gehäuse 2 ein Referenzmodul 38, das sich zur Referenzmessung in den Strahlengang verschieben lässt. Auf dieses Referenzmodul 38 wird anhand der Figuren 4 bis 6 detailliert eingegangen.

Mit den Bezugszeichen 40 und 42 sind ein PC-Board und ein Motor-Board 40 bzw. das Messsystem 42 zur Ansteuerung des Laserkopfs 34 und des Detektormoduls 36 und zur Auswertung der empfangenen Messsignale bezeichnet. Im Gehäuseunterteil 4 ist des Weiteren noch ein Connector-Board 44 für die Anschlüsse 26 aufgenommen.

Wie vorstehend erwähnt, sind diese Baugruppen im Wesentlichen in Horizontalrichtung aufgelöst nebeneinanderliegend angeordnet, so dass nur wenig Bauraum in Höhenrichtung (vertikal zur Standfläche) benötigt wird.

In Fig. 4 ist nochmals der Strahlengang des Laserscanners 1 anhand einer stark schematisierten Zeichnung dargestellt. Wie vorstehend ausgeführt, ist der aus dem Gehäuse 2 herausragende Rotorkopf 9 mit der Ablenkeinheit 8 über eine als Hohlspindel ausgeführte Spindel 46 angetrieben, die um die Drehachse 30 drehbar gelagert ist. Der Messstrahl tritt in Richtung der Drehachse 30 in die Spindel 46 ein und wird über den genannten Umlenkspiegel 46 umgelenkt, so dass er durch das Austrittsfenster 48 des Rotorkopfs 9 hindurch austritt. Wie erläutert, ist dieses durch ein Schutzglas 50 abgedeckt.

Der Messstrahl wird über den angedeuteten Laserkopf 34 durch einen Parabolspiegel (Empfangsspiegel) 52 hindurch in die Spindel 28 eingekoppelt. Der vom Messobjekt reflektierte Messstrahl 54 wird in an sich bekannter Weise am Parabolspiegel 52 hin zum Detektormodul 36 umgelenkt. Wie im eingangs genannten Stand der Technik erläutert, tritt der vom Messobjekt reflektierte Messstrahl durch das Austrittsfenster 48 hindurch in den Rotorkopf 9 der Ablenkeinheit 8 ein und wird dann durch den Umlenkspiegel 46 in Richtung zum Parabolspiegel (Empfangsspiegel) 52 umgelenkt.

Quer zum Messstrahl ist im Bereich zwischen dem Laserkopf 34 und der Spindel 28 das Referenzmodul 38 angeordnet, das im Prinzip aus einer in den Strahlengang verfahrbaren Referenzplatte 56 und einer Antriebseinheit 58 zur Verstellung der Referenzplatte 56 besteht.

Die Referenzplatte 56 ist beim dargestellten Ausführungsbeispiel aus Aluminium ausgeführt und hat an ihrem Endabschnitt eine Nut 60, durch die zwei schräg angestellte Umlenkflächen 62, 64 ausgebildet sind, entlang denen, wie in Figur 5 dargestellt, der vom Laserkopf 34 abgegebene Laserstrahl umgelenkt werden kann, ohne dass Laserlicht in die Spindel 28 eintreten kann. Dabei ist die Referenzplatte 56, insbesondere die Nut 60, so ausgelegt, dass selbst in diesem extremen Nahbereich noch Licht in den Detektor 36 gelangen kann.

Wie im Folgenden ausgeführt, ist die Referenzplatte 56 sehr präzise entlang einer Linearführung der Antriebseinheit 58 geführt, so dass die Referenzplatte 56 sehr exakt in dem Strahlengang positioniert werden kann. Hierzu wird gemäß Figur 5 die Referenzplatte 56 durch Ansteuerung der Antriebseinheit 58 in den Strahlengang verschoben, so dass der vom Laserkopf 34 emittierte Laserstrahl über die beiden Umlenkflächen 62, 64 in Richtung zum Parabolspiegel 52 umgelenkt wird, der wiederum den Referenzstrahlengang hin zum Detektormodul 36 ausrichtet. Dieser Referenzstrahlengang ist in Figur 5 mit dem Bezugszeichen 66 versehen. Dementsprechend blockiert die Referenzplatte 56 in der in Figur 5 dargestellten Referenzposition den ausgehenden Laserstrahl in Richtung zur Spindel 28, so dass dieser durch die exakte Positionierung der Referenzplatte 56 in definierter Distanz und Intensität in das Detektormodul 36 rückgestreut wird. Dabei gewährleistet die Ausgestaltung der Nut 60 mit den beiden zueinander beabstandeten Umlenkflächen 62, 64, dass trotz der minimalen Distanz zum Detektormodul 36 noch Laserlicht in dieses gelangt.

Nach der Referenzmessung wird dann die Referenzplatte 56 wieder in die Grundposition gemäß Figur 4 aus dem Messstrahlengang heraus bewegt, der dann in keiner Weise durch das Referenzmodul 38 behindert ist.

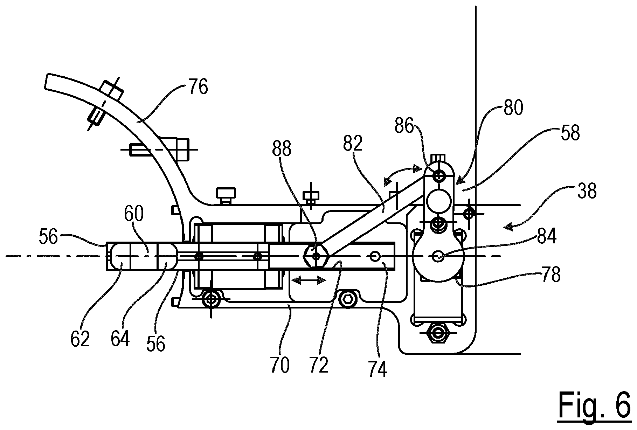

Anhand Figur 6 wird beispielhaft der Aufbau eines Ausführungsbeispiels eines Referenzmoduls 38 erläutert, wobei dieses in einer gegenüber der Darstellung in Figur 5 um 90° verdrehten Ansicht dargestellt ist, sodass sich die Nut 60 zum Betrachter hin öffnet. In der Darstellung gemäß Figur 6 ist des Weiteren eine Abdeckung 67 abgenommen, durch die die eigentlichen Antriebselemente des Referenzmoduls 38 abgedeckt sind und die eine Sensorplatine 68 trägt.

Gemäß der Darstellung in Figur 6 hat das Referenzmodul 38 eine Trägerplatte 70, die mit einer Linearführung 72 ausgebildet ist, entlang der ein die Referenzplatte 56 tragender Schieber 74 äußerst präzise geführt ist. Beim dargestellten Ausführungsbeispiel ist die Trägerplatte 70 noch mit einem gebogenen Flansch 76 ausgebildet, über den das Referenzmodul 38 am Laserkopf 34 und/oder an einer anderen Komponente befestigbar ist.

Die Verstellung des Schiebers 74 und damit der Referenzplatte 56 erfolgt über die eigentliche Antriebseinheit 58, die beim dargestellten Ausführungsbeispiel durch einen Servomotor 78, einen von diesem verschwenkbaren Servohebel 80 und eine Koppelstange 82 gebildet ist. Der Servohebel 80 ist mit einer Antriebswelle 84 des Servomotors 78 verbunden und über ein Schwenkgelenk 86 an die Koppelstange 82 angelenkt. Deren vom Servohebel 80 entfernter Endabschnitt ist wiederum über ein Gelenk 88 mit dem Schieber 74 verbunden. Dementsprechend kann durch Ansteuerung des Servomotors 78 der Servohebel 80 in der Darstellung gemäß Figur 6 nach links verschwenkt werden, wobei diese Schwenkbewegung über die Koppelstange 82 auf dem Schieber 74 übertragen wird, sodass dieser entlang der Linearführung 72 in die Referenzposition (Figur 5) verstellt wird. Nach der Referenzmessung wird dann über den Servomotor 78 der Servohebel 80 zurück in die in Figur 6 dargestellte Position zurückverschwenkt und entsprechend der Schieber 74 mit der Referenzplatte 56 aus dem Strahlengang heraus bewegt.

Der Servomotor 78 ist so ausgelegt, dass er eine sehr präzise Verstellung des Schiebers 74 erlaubt, wobei die Endpositionen der Referenzplatte 56 über geeignete Sensoren, beispielsweise Reed-Kontakte erfasst werden, die mit der Sensorplatine 68 in Wirkverbindung entstehen. Auf diese Weise ist eine sehr exakte Positionierung der Referenzplatte 56, insbesondere der Nut 60 mit den Umlenkflächen 62, 64 innerhalb des Strahlengangs gewährleistet.

Anstelle der beschriebenen linearen Verstellung der Referenzplatte 56 kann auch eine Winkelverstellung vorgesehen werden, wobei dann die Referenzplatte 56 in den Strahlengang eingeschwenkt wird.

Wie vorstehend ausgeführt, ist das Referenzmodul sowohl in der Grundposition als auch in der Referenzposition durch das Gehäuse 2 abgedeckt und somit zuverlässig gegenüber äußeren Einflüssen geschützt, so dass die Referenzmessung mit hoher Präzision erfolgen kann.

Offenbart ist ein 2D-Laserscanner mit einem strömungsoptimierten Gehäuse, an dem ein Rotorkopf gehalten ist und in dem unter anderem auch ein Referenzmodul aufgenommen ist, so dass dieses während der Referenzmessung gegenüber Umwelteinflüssen geschützt ist.

### Bezugszeichenliste:

- 1: Laserscanner
- 2: Gehäuse
- 4: Gehäuseunterteil
- 6: Gehäusedeckel
- 8: Ablenkeinheit
- 9: Rotorkopf
- 10: Abflachung
- 12: Tragrippe
- 14: Stirnfläche
- 16: Stirnfläche
- 18: Seitenfläche
- 20: Seitenfläche
- 22: Grundfläche
- 24: Grundfläche
- 26: Anschlüsse
- 28: Spindel / Hohlspindel
- 30: Drehachse
- 32: Motor
- 34: Laserkopf
- 36: Detektormodul
- 38: Referenzmodul
- 40: PC-/Motorboard
- 42: Messsystem
- 44: Connectorboard
- 46: Umlenkspiegel
- 48: Austrittsfenster
- 50: Schutzglas
- 52: Parabolspiegel
- 54: Messstrahl
- 56: Referenzplatte
- 58: Antriebseinheit
- 60: Nut
- 62: Umlenkfläche
- 64: Umlenkfläche
- 66: Referenzstrahlgang
- 67: Abdeckung
- 68: Sensorplatine
- 70: Trägerplatte
- 72: Linearführung
- 74: Schieber
- 76: Flansch
- 78: Servomotor
- 80: Servohebel
- 82: Koppelstange
- 84: Antriebswelle
- 86: Schwenkgelenk
- 88: Gelenk

## Patentansprüche

1. 2D-Laserscanner mit einem Laserkopf (34) zur Abgabe eines Messstrahls (54), einer rotierenden, mittels eines Antriebs angetriebenen Ablenkeinheit (8) zum Ablenken des Messstrahls in Richtung eines Messobjekts, einem Detektormodul (36) zum Erfassen des vom Messobjekt reflektierten Empfangs-/Messstrahls und einer Steuer- und Auswerteeinheit zur Signalverarbeitung, sowie mit einem Referenzmodul (38) zur Kompensierung von das Messsignal beeinflussenden Umwelteinflüssen, wobei der Antrieb, der Laserkopf (34), das Detektormodul (36), die Steuereinheit und das Referenzmodul (38) in einem Gehäuse (2) aufgenommen sind, **dadurch gekennzeichnet, dass** die Ablenkeinheit (8) in einem Rotorkopf (9) aufgenommen ist, der drehbar gelagert an das Gehäuse (2) angesetzt ist, sodass nach außen hin der Rotorkopf (9) mit der Ablenkeinheit (8) aus dem Gehäuse (2) auskragt, und dass das Referenzmodul (38) eine Referenzplatte (56) hat, die ausgelegt ist, zur Referenzmessung in den Strahlengang zwischen dem Laserkopf (34) und der Ablenkeinheit (8) verstellt zu werden.

2. Laserscanner nach Patentanspruch 1, wobei die Referenzplatte (56) zwei einander zugewandte, schräg angestellte Umlenkflächen (62) hat, durch die der Messstrahl vorzugsweise um 180° umgelenkt ist.

3. Laserscanner nach Patentanspruch 2, wobei die Umlenkflächen (62, 64) an einer Nut (60) der Referenzplatte (56) ausgebildet sind.

4. Laserscanner nach einem der Patentansprüche 1 bis 3, wobei die Referenzplatte (56) motorisch verstellbar ist.

5. Laserscanner nach Patentanspruch 4, wobei die Referenzplatte (56) mittelbar oder unmittelbar entlang einer Linearführung (72) geführt ist.

6. Laserscanner nach Patentanspruch 4 oder 5, wobei die motorische Verstellung mittels eines Linearantriebs erfolgt.

7. Laserscanner nach Patentanspruch 6, wobei der Linearantrieb einen Servomotor (78) hat, der über einem Lenkermechanismus mit der Referenzplatte (56) verbunden ist.

8. Laserscanner nach Patentanspruch 7, wobei der Lenkermechanismus einen vom Servomotor (78) angetriebenen Servohebel (80) hat, der gelenkig mit einer Koppelstange (82) verbunden ist, die ihrerseits mittelbar oder unmittelbar an der Referenzplatte (56) angelenkt ist.

9. Laserscanner nach einem der vorhergehenden Patentansprüche, wobei die Verstellrichtung der Referenzplatte (56) quer zum Messstrahl orientiert ist.

10. Laserscanner nach einem der vorhergehenden Patentansprüche, wobei das Referenzmodul (38), der Antrieb, der Laserkopf (34), das Detektormodul (36) und die Steuereinheit im Wesentlich nebeneinanderliegend im Gehäuse (2) angeordnet sind.

11. Laserscanner nach Patentanspruch 10, wobei das Gehäuse (2) eine Höhe, H, bezogen auf eine Standfläche, hat, die geringer ist als das Dreifache des Außendurchmessers, D, der Ablenkeinheit (8), vorzugsweise etwa das Doppelte des Außendurchmessers, D, ist.

12. Laserscanner nach einem der vorhergehenden Patentansprüche, wobei das Gehäuse (2) etwa quaderförmig mit im Wesentlichen glattflächigen, verrundeten Wandungen ausgebildet ist.

13. Laserscanner nach Patentanspruch 12, wobei eine von einer Standfläche beabstandete Grundfläche (22) des Gehäuses (2) in einem zum Rotorkopf (9) beabstandeten Bereich abfallend geneigt ist.

14. Laserscanner nach einem der vorhergehenden Patentansprüche, mit Sensoren, vorzugsweise Reed-Kontakten zur Erfassung einer Referenzplattenposition.

## Claims

1. A 2D laser scanner comprising a laser head (34) for outputting a measuring beam (54), a rotating deflection unit (8) for deflecting the measuring beam in the direction of a measuring object, which deflection unit is driven by means of a drive, a detector module (36) for detecting the reception/measuring beam reflected from the measuring object, and a control and evaluation unit for signal processing as well as a reference module (38),for compensating environmental influences on the measuring signal, the drive, the laser head (34), the detector module (36), the control unit and the reference module (38) being received in a housing (2), **characterized in that** the deflection unit (8) is received in a rotor head (9), which is rotatably mounted on the housing (2), so that the rotor head (9) with the deflection unit (8) projects outwards from the housing (2), and the reference module (38) has a reference plate (56) configured to be moved in the beam path between the laser head (34) and the deflection unit (8) for reference measurement.

2. The laser scanner according to claim 1, wherein the reference plate (56) has two deflection surfaces (62) which face one another in an angled manner, by means of which the measurement beam is deflected preferably by 180°.

3. The laser scanner according to claim 3, wherein the deflection surfaces (62, 64) are formed at a groove (60) of the reference plate (56).

4. The laser scanner according to any of claims 1 to 3, wherein the reference plate (56) is motor-adjustable.

5. The laser scanner according to claim 4, wherein the reference plate (56) is guided indirectly or directly along a linear guide (72).

6. The laser scanner according to claim 4 or 5, wherein the motor-adjustment is performed by means of a linear drive.

7. The laser scanner according to claim 6, wherein the linear drive comprises a servo motor (78) connected with the reference plate (56) via a steering mechanism.

8. The laser scanner according to claim 7, wherein the steering mechanism comprises a servo lever (80) driven by the servo motor (78), said servo lever being articulated to a coupling rod (82) which is in turn hinged indirectly or directly to the reference plate (56).

9. The laser scanner according to any of the preceding claims, wherein the adjustment direction of the reference plate (56) is oriented transversely to the measureing beam.

10. The laser scanner according to any of the preceding claims, wherein the reference module (38), the drive, the laser head (34), the detector module (36), and the control unit are arranged substantially side by side in the housing (2).

11. The laser scanner according to claim 10, wherein the housing (2) has a height H relative to the footprint, which is smaller than the three-fold of the outer diameter D of the deflection unit (8), preferably approximately twice as much as the outer diameter D.

12. The laser scanner according to any of the preceding claims, wherein the housing (2) is of approximately cuboid shape with substantially smooth-faced, rounded walls.

13. The laser scanner according to claim 12, wherein a base area (22) of the housing (2) which is spaced apart from a footprint is slopingly inclined in an area spaced apart from the rotor head (9).

14. The laser scanner according to any of the preceding claims, comprising sensors, preferably reed contacts, for detecting a reference plate position.

## Revendications

1. Scanner laser 2D avec une tête laser (34) pour l'émission d'un faisceau de mesure (54), une unité de déviation (8) rotative, entraînée au moyen d'un entraînement pour la déviation du faisceau de mesure en direction d'un objet de mesure, un module de détection (36) pour la détection du faisceau de réception/de mesure réfléchi par l'objet de mesure et un dispositif de commande et d'évaluation pour le traitement de signal, ainsi qu'avec un module de référence (38) pour la compensation d'influences environnementales influençant le signal de mesure, dans lequel l'entraînement, la tête laser (34), le module de détection (36), le dispositif de commande et le module de référence (38) sont reçus dans un boîtier (2), **caractérisé en ce que** l'unité de déviation (8) est reçue dans une tête de rotor (9) qui est placée en étant logée de manière rotative au niveau du boîtier (2), de sorte que la tête de rotor (9) avec l'unité de déviation (8) dépasse du boîtier (2) vers l'extérieur, et **en ce que** le module de référence (38) présente une plaque de référence (56) qui est conçue afin d'être ajustée pour la mesure de référence dans le trajet de faisceau entre la tête laser (34) et l'unité de déviation (8).

2. Scanner laser selon la revendication 1, dans lequel la plaque de référence (56) présente deux surfaces de renvoi (62) tournées l'une vers l'autre, inclinées, par lesquelles le faisceau de mesure est renvoyé de préférence de 180°.

3. Scanner laser selon la revendication 2, dans lequel les surfaces de renvoi (62, 64) sont réalisées au niveau d'une rainure (60) de la plaque de référence (56).

4. Scanner laser selon l'une quelconque des revendications 1 à 3, dans lequel la plaque de référence (56) est réglable de manière motorisée.

5. Scanner laser selon la revendication 4, dans lequel la plaque de référence (56) est guidée indirectement ou directement le long d'un guidage linéaire (72).

6. Scanner laser selon la revendication 4 ou 5, dans lequel le réglage motorisé est effectué au moyen d'un entraînement linéaire.

7. Scanner laser selon la revendication 6, dans lequel l'entraînement linéaire présente un servomoteur (78) qui est relié à la plaque de référence (56) par le biais d'un mécanisme de liaison.

8. Scanner laser selon la revendication 7, dans lequel le mécanisme de liaison présente un levier assisté (80) entraîné par le servo-moteur (78) qui est relié de manière articulée à une tige de couplage (82) qui est articulée de son côté indirectement ou directement à la plaque de référence (56).

9. Scanner laser selon l'une quelconque des revendications précédentes, dans lequel le sens de réglage de la plaque de référence (56) est orienté transversalement au faisceau de mesure.

10. Scanner laser selon l'une quelconque des revendications précédentes, dans lequel le module de référence (38), l'entraînement, la tête laser (34), le module de détection (36) et le dispositif de commande sont agencés sensiblement les uns à côté des autres dans le boîtier (2).

11. Scanner laser selon la revendication 10, dans lequel le boîtier (2) présente une hauteur, H, par rapport à une surface d'appui qui est inférieure au triple du diamètre extérieur, D, de l'unité de déviation (8), de préférence environ au double du diamètre extérieur, D.

12. Scanner laser selon l'une quelconque des revendications précédentes, dans lequel le boîtier (2) est formé environ de manière parallélépipédique avec des parois arrondies, sensiblement à surface lisse.

13. Scanner laser selon la revendication 12, dans lequel une surface de base (22) espacée d'une surface d'appui du boîtier (2) est inclinée en descendant dans une zone espacée par rapport à la tête de rotor (9).

14. Scanner laser selon l'une quelconque des revendications précédentes, avec des capteurs, de préférence des contacts Reed pour la détection d'une position de plaque de référence.
